# EUROPEAN PATENT APPLICATION

(11) **EP 4 692 515 A1**
(43) Date of publication of application: **11.02.2026**
(21) Application number: 23931990.8
(22) Date of filing: 05.04.2023
(51) Int. Cl.: F01K 7/32, F01K 25/10

(54) **POWER PLANT**

(71) Applicant: Energy Dome S.p.A., 20131 Milano (IT)
(72) Inventor: KAMIYA, Atsushi, Yokohama-shi, Kanagawa 220-6001 (JP); NAGAISHI, Akira, Yokohama-shi, Kanagawa 220-6001 (JP)
(74) Representative: PGA S.p.A.
(86) International application number: PCT/JP2023/014032
(87) International publication number: WO 2024/209578

(57) **Abstract**

A power plant of the present invention is a power plant for generating electric power through use of a working fluid, and includes: a compression unit configured to compress the working fluid to a subcritical state or a supercritical state through use of a part of variable renewable energy; a storage unit configured to store the compressed working fluid; an energy storage unit configured to store energy derived from another part of the variable renewable energy; a heating unit configured to heat the working fluid through use of the energy stored in the energy storage unit; a drive unit configured to convert the pressure energy and the thermal energy applied to the working fluid into mechanical energy and perform drive through use of the mechanical energy; and an adjustment unit configured to adjust a ratio between an energy amount of the variable renewable energy to be supplied toward the compression unit and an energy amount of the variable renewable energy to be supplied toward the energy storage unit. According to the present invention, the power plant capable of effectively using the variable renewable energy can be provided.

## Description

### Technical Field

The present invention relates to a power plant.

### Background Art

Supercritical CO₂ energy storage (SCES) is a power storage system which uses CO₂ having a good pressure boosting efficiency as a working fluid to store energy through use of CO₂ in a supercritical state.

When the working fluid after compression is not in a supercritical state but in a gas state, a volume of a storage unit for storing the working fluid is increased. Further, when the working fluid after compression is in the supercritical state, the volume of the storage unit is reduced, but in order to supply the working fluid to a turbine to increase electric power to be generated, the working fluid is required to be increased in pressure and further heated to achieve a high temperature.

In view of the above, in order to recover electric power more efficiently, studies on a configuration in which electric power is generated under a state in which the working fluid stored in a supercritical state is heated to obtain thermal energy are in progress.

For example, in Patent Literature 1, the following configuration is disclosed. That is, carbon dioxide in a supercritical state is used to store energy, and the carbon dioxide is heated to obtain thermal energy. Pressure energy and thermal energy of the carbon dioxide are transmitted to a drive machine so that electric power is generated. In Patent Literature 1, as a heat source for heating the working fluid, sunlight, exhaust heat from factories, and exhaust heat from a turbine are given.

For example, energies such as sunlight, wind power, and solar heat are also called variable renewable energy (VRE) because output of each of the energies greatly varies depending on natural conditions and the like. Variable renewable energy is a promising, diverse, and important low-carbon/carbon-free domestic energy source that can also contribute to energy security because, for example, variable renewable energy does not emit greenhouse gases, and can be produced domestically.

However, power generation using variable renewable energy has a problem in that the output cannot be changed in accordance with a demand for electric power because the amount of power generation varies depending on natural conditions. For example, power generation using sunlight produces almost no output at night after sunset, and the output amount greatly reduces on cloudy or rainy days.

Accordingly, there has been a demand for a power plant using variable renewable energy to have a configuration in which surplus electric power is stored when the demand for electric power is low and electric power is supplied when there is a demand for electric power, to thereby allow the output in accordance with the demand for electric power to effectively use the variable renewable energy, but this demand has not been sufficiently met.

As described above, there is a demand for a power plant capable of effectively using variable renewable energy.

### Citation List

### Patent Literature

[PTL 1] WO 2021/165809 A1

### Summary of Invention

### Technical Problem

The present invention has an object to provide a power plant capable of effectively using variable renewable energy.

### Solution to Problem

Such an object is achieved by the present invention as described in Items (1) to (8) below.
(1) A power plant for generating electric power through use of a working fluid, the power plant including:
   a compression unit configured to compress the working fluid to a subcritical state or a supercritical state through use of a part of variable renewable energy to apply pressure energy to the working fluid;
   a storage unit configured to store the compressed working fluid;
   an energy storage unit configured to store energy derived from another part of the variable renewable energy;
   a heating unit configured to heat the working fluid through use of the energy stored in the energy storage unit to apply thermal energy to the compressed working fluid;
   a drive unit configured to convert the pressure energy and the thermal energy applied to the working fluid into mechanical energy and perform drive through use of the mechanical energy; and
   an adjustment unit configured to adjust a ratio between an energy amount of the variable renewable energy to be supplied toward the compression unit and an energy amount of the variable renewable energy to be supplied toward the energy storage unit.
(2) The power plant according to Item (1), wherein the working fluid is at least one type selected from the group consisting of air, nitrogen, and carbon dioxide.
(3) The power plant according to Item (1) or (2), wherein, when the compression unit and the energy storage unit are simultaneously activated, the adjustment unit is configured to adjust a ratio between an energy amount of the variable renewable energy to be used in the compression unit and an energy amount of the variable renewable energy to be stored in the energy storage unit.
(4) The power plant according to any one of Items (1) to (3), wherein, when activation and stop are switched for at least one of the compression unit or the energy storage unit to provide a timing to activate only one of the compression unit or the energy storage unit, the adjustment unit is configured to adjust a ratio between a time period in which the variable renewable energy is used in the compression unit and a time period in which the variable renewable energy is stored in the energy storage unit.
(5) The power plant according to any one of Items (1) to (4), wherein the energy to be stored in the energy storage unit is potential energy of hydrogen obtained by electrolyzing water through use of the variable renewable energy or thermal energy obtained by combusting the hydrogen.
(6) The power plant according to any one of Items (1) to (5), wherein the energy to be stored in the energy storage unit is thermal energy stored in heating medium oil by activating an electric heater through use of the variable renewable energy to heat the heating medium oil with the electric heater.
(7) The power plant according to any one of Items (1) to (6), wherein the energy to be stored in the energy storage unit is thermal energy stored in a rock by activating an electric heater through use of the variable renewable energy to heat the rock with the electric heater.
(8) The power plant according to any one of Items (1) to (7), wherein the energy to be stored in the energy storage unit is thermal energy obtained by activating a heat pump through use of the variable renewable energy to increase a temperature of exhaust heat from the compression unit with the heat pump.

### Advantageous Effects of Invention

According to the present invention, the power plant capable of effectively using the variable renewable energy can be provided.

### Brief Description of Drawings

FIG. 1 is a block diagram for schematically illustrating a power plant according to a first embodiment of the present invention.
FIG. 2 is a pressure-temperature phase equilibrium diagram for carbon dioxide which is a working fluid.
FIG. 3 is a block diagram for schematically illustrating another configuration example of the power plant according to the first embodiment of the present invention.
FIG. 4 is a pressure-specific enthalpy diagram (p-h diagram) for illustrating a state of carbon dioxide which is the working fluid, in a power generation cycle of the power plant.
FIGS. 5 are diagrams for schematically illustrating a ratio between electric power to be used in a compression unit and electric power to be used in an energy storage unit, in the power plant.
FIGS. 6 are diagrams for illustrating a ratio between a time period in which the variable renewable energy is used in the compression unit and a time period in which the variable renewable energy is stored in the energy storage unit, in the power plant.
FIG. 7 is a block diagram for schematically illustrating a power plant according to a second embodiment of the present invention.
FIG. 8 is a block diagram for schematically illustrating a power plant according to a third embodiment of the present invention.
FIG. 9 is a block diagram for schematically illustrating a power plant according to a fourth embodiment of the present invention.

### Description of Embodiments

Now, preferred embodiments of the present invention are described in detail.

As used herein, the term "charging" refers to compressing a working fluid to bring the working fluid into a subcritical state or a supercritical state. Further, the term "storing energy" refers to storing a working fluid that has been brought into the subcritical state or the supercritical state. Further, the term "power generation" refers to generating electricity through use of the working fluid in the subcritical state or the supercritical state. Further, the phrase "supply of electric power" refers to supplying the generated electricity to an outside of the plant.

### <First Embodiment>

### [1] Power Plant

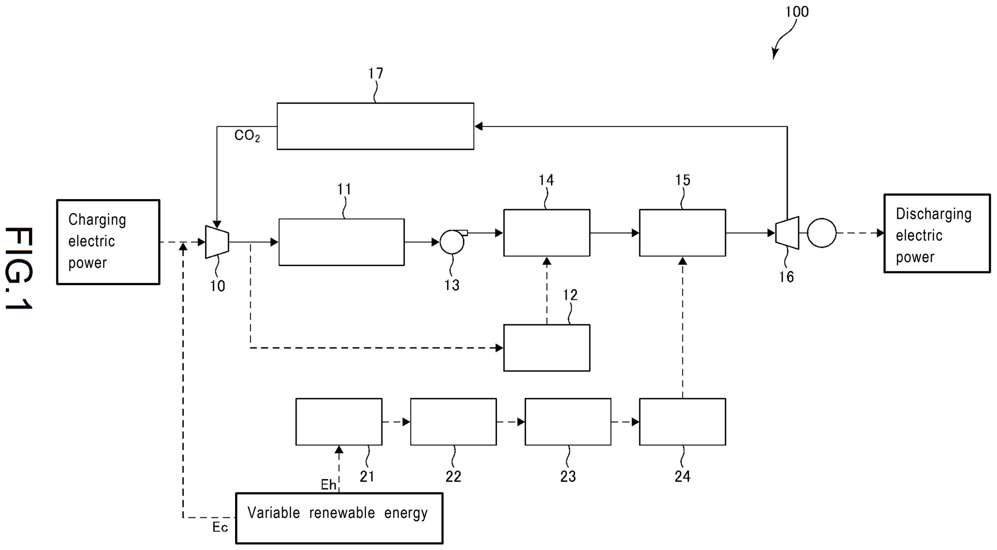

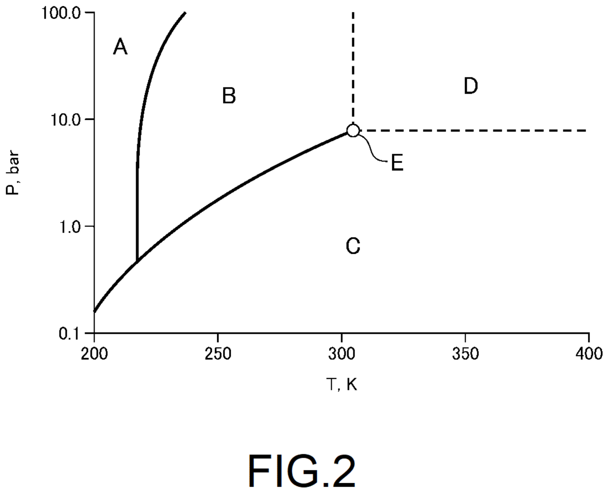

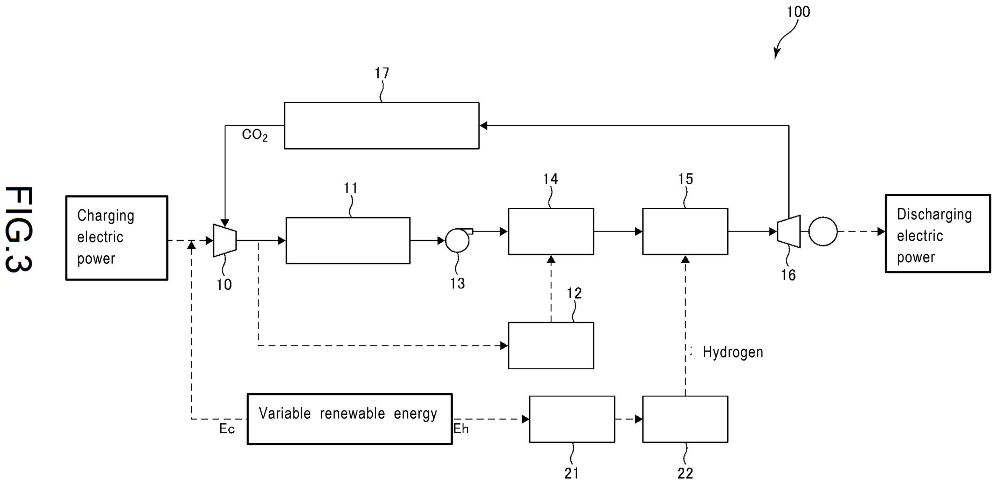

FIG. 1 is a block diagram for schematically illustrating a power plant according to a first embodiment of the present invention. FIG. 2 is a pressure-temperature phase equilibrium diagram for carbon dioxide which is a working fluid. FIG. 3 is a block diagram for schematically illustrating another configuration example of the power plant according to the first embodiment of the present invention. In FIG. 2, the X axis represents a temperature T, the Y axis represents a pressure P, and the Y axis is represented on a logarithmic scale.

The power plant 100 generates electric power through use of a working fluid. Further, the power plant 100 includes: a compression unit 10 that compresses the working fluid to a subcritical state or a supercritical state through use of a part of variable renewable energy to apply pressure energy to the working fluid; a storage unit 11 that stores the compressed working fluid; an energy storage unit that stores energy derived from another part of the variable renewable energy; a heating unit 15 that heats the working fluid through use of the energy stored in the energy storage unit to apply thermal energy to the compressed working fluid; a drive unit 16 that converts the pressure energy and the thermal energy applied to the working fluid into mechanical energy and perform drive through use of the mechanical energy; and an adjustment unit that adjusts a ratio between an energy amount Ec of the variable renewable energy to be supplied toward the compression unit 10 and an energy amount Eh of the variable renewable energy to be supplied toward the energy storage unit.

In the power plant 100, depending on changes in supply amount of the variable renewable energy and demand for electric power, the adjustment unit adjusts the ratio between the energy amount Ec of the variable renewable energy to be supplied toward the compression unit 10 and the energy amount Eh of the variable renewable energy to be supplied toward the energy storage unit. Thus, the power plant 100 can store surplus electric power when the demand for electric power is lower than the supply amount of the variable renewable energy, and can supply electric power when the demand for electric power is higher. In this manner, the power plant 100 can effectively use the variable renewable energy.

As used herein, the term "variable renewable energy" refers to energy whose output greatly varies depending on natural conditions and the like. Examples of such variable renewable energy include sunlight energy, solar thermal energy, wind energy, tidal energy, and wave energy.

Further, as used herein, the term "supercritical state" refers to a state of a substance placed under a temperature and a pressure equal to or larger than a critical point. A fluid in the supercritical state is said to be in a state in which whether the fluid is a gas or a liquid is indistinguishable, and has both diffusibility of the gas and solubility of the liquid. Further, the term "subcritical state" refers to a state of a substance placed under a temperature and a pressure in a region slightly lower than but close to the critical point.

### [1-1] Working Fluid

The working fluid is a fluid that receives heat from a heat source and performs external work in the power plant 100 which is a heat engine. In particular, in this embodiment, the working fluid is a fluid for rotating a turbine generator in the drive unit 16 to generate electric power.

The working fluid is not particularly limited as long as the working fluid can take the subcritical state or the supercritical state. However, it is preferred that the working fluid be at least one type selected from the group consisting of air, nitrogen, and carbon dioxide, and it is more preferred that the working fluid be carbon dioxide.

Those substances are substances that are easily available and inexpensive to purchase.

Among the substances, carbon dioxide is an inert substance and is safe to handle, and is a substance that can take the supercritical state by being heated and pressurized at a relatively low temperature and a relatively low pressure. Accordingly, carbon dioxide is advantageous in that, for example, the compression unit 10 can be downsized and formed as an inexpensive configuration, and energy required to compress the working fluid to the subcritical state or the supercritical state can be suppressed to be low. Further, carbon dioxide has low corrosiveness and good thermal stability. Further, carbon dioxide is also non-toxic and non-flammable, and hence has a small influence on the power generation equipment and contributes to reduction in operation cost.

In the following description, a case in which carbon dioxide (CO₂) is used as the working fluid is mainly described.

The carbon dioxide used as the working fluid, as used herein, refers to a concept that widely includes pure carbon dioxide, carbon dioxide slightly containing impurities, fluids obtained by mixing one or more additives to carbon dioxide, and the like.

Further, in the following description, the carbon dioxide in the supercritical state may be referred to as "supercritical CO₂."

Supercritical CO₂ has a single phase, and hence a single-phase flow heat exchanger can be used therefor, and thus the cost of the power plant 100 can be greatly reduced. Moreover, supercritical CO₂ is adaptable to various heat sources.

When supercritical CO₂ is used as the working fluid in the power plant 100, the turbine generator can generate electric power at higher efficiency and lower cost with an appropriate inlet temperature. As described above, when supercritical CO₂ is used as the working fluid of the power plant 100, for example, the turbine generator and the heat exchanger can be downsized.

The power plant 100 illustrated in FIG. 1 includes the compression unit 10, the storage unit 11, an exhaust heat storage unit 12, a booster pump 13, a heat exchanger 14, the heating unit 15, the drive unit 16, a low-pressure working fluid storage tank 17, a water electrolysis device 21, a hydrogen storage tank 22, a hydrogen combustion unit 23, a hydrogen heat storage unit 24 serving as the energy storage unit, and the adjustment unit (not shown).

### [1-2] Compression Unit

The compression unit 10 uses a part of the variable renewable energy to compress the working fluid to the subcritical state or the supercritical state, to thereby apply pressure energy to the working fluid.

The compression unit 10 is not particularly limited, and includes, for example, an electric turbo gas compressor.

The compression unit 10 is driven by electric power generated through use of a part of the variable renewable energy, but the compression unit 10 is not limited thereto and may use electric power generated through use of energy other than the variable renewable energy.

In regions of FIG. 2, carbon dioxide which is the working fluid is present in the following states. That is, carbon dioxide is a solid in a region A, a liquid in a region B, and a gas in a region **C.** In a region D in which the temperature and the pressure exceed those at a critical point E, carbon dioxide is present as a supercritical fluid.

Thus, as used herein, the term "critical point" of the supercritical fluid refers to the lowest temperature and the lowest pressure at which a substance can be said to be in the supercritical state. Further, the terms "critical temperature" and "critical pressure" refer to the temperature and the pressure at the critical point, respectively.

Carbon dioxide has the critical temperature of 31.1°C and the critical pressure of **7.3** MPa.

The value of the pressure of the working fluid, for example, carbon dioxide, as used herein, refers to a numerical value indicated by a gauge pressure using an atmospheric pressure as a reference.

### [1-3] Storage Unit

The storage unit 11 at least temporarily stores the working fluid in the subcritical state or the supercritical state produced in the above-mentioned compression unit 10.

The storage unit 11 is not particularly limited, and includes, for example, a tank for storing a liquefied gas or a gas.

### [1-3] Exhaust Heat Storage Unit

The exhaust heat storage unit 12 recovers exhaust heat generated when the working fluid is compressed by the compression unit 10, and at least temporarily stores the thermal energy, in other words, stores heat.

The exhaust heat storage unit 12 is not particularly limited, and is, for example, a section that uses a heating medium oil to store heat and stores the heating medium oil in an insulated storage tank.

### [1-4] Booster Pump

The booster pump 13 boosts the pressure of the working fluid stored in the storage unit 11.

The working fluid in the supercritical state can be boosted in pressure with electric power smaller than in the case of gas. In other words, the working fluid in the supercritical state can be boosted in pressure by a pump instead of a gas compressor.

The booster pump 13 is not particularly limited, and for example, a multistage centrifugal pump or the like can be used.

In the booster pump 13, the supercritical CO₂ is pressurized to, for example, 10 MPa or more and 20 MPa or less.

In this manner, pressure energy can be further applied to the supercritical CO₂, and the energy of the working fluid can be more suitably increased.

### [1-5] Heat Exchanger

The heat exchanger 14 heats the working fluid with the thermal energy stored in the exhaust heat storage unit 12, in other words, with the exhaust heat from the compression unit 10.

The heat exchanger 14 applies thermal energy from the exhaust heat storage unit 12 to the supercritical CO₂ flowing in the heat exchanger 14.

The heat exchanger 14 is not particularly limited, and includes, for example, a general exchanger such as a shell-and-tube heat exchanger.

With the exhaust heat from the compression unit 10 being recovered and utilized, the energy in the power generation cycle can be effectively used. In this manner, the efficiency of the power generation cycle can be improved.

### [1-6] Energy Storage Unit

The energy storage unit stores energy derived from another part of the variable renewable energy.

The power plant 100 illustrated in FIG. 1 includes the water electrolysis device 21, the hydrogen storage tank 22, the hydrogen combustion unit 23, and the hydrogen heat storage unit 24 serving as the energy storage unit.

In other words, in the power plant 100 illustrated in FIG. 1, the energy derived from the variable renewable energy and stored in the energy storage unit is thermal energy obtained by combusting hydrogen obtained by electrolyzing water through use of the variable renewable energy.

In addition to a general effect of the present invention that a large amount of energy can be recovered at the time of generating electric power by the drive unit by causing the supercritical CO₂ to have a high temperature and a high pressure through use of the thermal energy stored in the energy storage unit, heat can be efficiently generated without emitting carbon dioxide by combusting hydrogen, and a larger amount of energy can be recovered by causing the supercritical CO₂ to have a high temperature through use of the generated heat.

The water electrolysis device 21 uses electric power generated through use of the variable renewable energy to produce hydrogen through electrolysis from water serving as a raw material.

The hydrogen storage tank 22 at least temporarily stores hydrogen produced by the water electrolysis device 21. The hydrogen stored in the hydrogen storage tank 22 may be, for example, in a gaseous state or may be absorbed to a hydrogen absorbing alloy to be stored.

Oxygen produced together with hydrogen in the water electrolysis device 21 may be, for example, released into the atmosphere or may be recovered. When oxygen produced in the water electrolysis device 21 is recovered, the oxygen may be used for combustion of hydrogen in the hydrogen combustion unit 23, or may be used for other purposes as oxygen having a high purity.

The hydrogen combustion unit 23 combusts the hydrogen stored in the hydrogen storage tank 22 to obtain thermal energy.

The hydrogen heat storage unit 24 serves as the energy storage unit to at least temporarily store the thermal energy obtained by combusting hydrogen in the hydrogen combustion unit 23.

In the hydrogen combustion unit 23, a hydrogen gas turbine may be used. Electric power may be generated by combusting hydrogen stored in the hydrogen storage tank 22 to rotate the turbine, and exhaust heat generated at the time of power generation may be stored as thermal energy in the hydrogen heat storage unit 24.

Further, in the hydrogen combustion unit 23, a hydrogen gas engine may be used. Electric power may be generated by combusting hydrogen stored in the hydrogen storage tank 22, and exhaust heat generated at the time of power generation may be stored as thermal energy in the hydrogen heat storage unit 24.

With the configuration using the hydrogen gas turbine or the hydrogen gas engine as described above, the exhaust heat generated at the time of power generation using hydrogen can also be utilized for power generation, and hence the total power generation efficiency can be more improved.

Further, the power plant 100 illustrated in FIG. 3 includes the water electrolysis device 21 and the hydrogen storage tank 22 serving as the energy storage unit. In other words, in the configuration illustrated in FIG. 1, the energy storage unit is the hydrogen heat storage unit 24 for storing thermal energy obtained by combusting, in the hydrogen combustion unit 23, the hydrogen obtained by the water electrolysis device 21, but in the configuration illustrated in FIG. 3, the energy storage unit is the hydrogen storage tank 22 for storing the hydrogen obtained by the water electrolysis device 21.

In still other words, in the power plant 100 illustrated in FIG. 3, energy derived from variable renewable energy and stored in the energy storage unit is potential energy of hydrogen obtained by electrolyzing water through use of the variable renewable energy. That is, the energy derived from variable renewable energy and stored in the energy storage unit is not limited to be in a form of thermal energy, but may be, as illustrated in FIG. 3, potential energy corresponding to energy (for example, thermal energy or electrical energy) released when hydrogen is oxidized.

In this manner, for example, the following effects can be obtained. First, hydrogen is used, and hence heat can be generated efficiently without emitting carbon dioxide, and a large amount of energy can be recovered by causing the supercritical CO₂ to have a high temperature through use of the generated heat. Further, high-pressure hydrogen is required when hydrogen is combusted in the hydrogen gas engine or the hydrogen gas turbine, but in the configuration as described above, high-pressure hydrogen is not required because hydrogen is only combusted in a heating furnace.

### [1-7] Heating Unit

The heating unit 15 heats the working fluid through use of the energy stored in the energy storage unit, and further applies thermal energy to the working fluid in the supercritical state.

The heating unit 15 is not particularly limited, and includes, for example, a heating furnace.

In the heating unit 15, the supercritical CO₂ is heated to, for example, about 250°C or more and about 600°C or less.

In this manner, the energy of the working fluid can be more suitably increased, and the power generation efficiency as the entire power plant 100 can be further enhanced.

### [1-8] Drive Unit

The drive unit 16 converts pressure energy and thermal energy applied to the working fluid into mechanical energy, and performs drive through use of the mechanical energy.

The drive unit 16 is not particularly limited, and includes, for example, a turbine.

The drive unit 16 is supplied with, as the working fluid, the supercritical CO₂ discharged from the heating unit 15.

The high-temperature and high-pressure working fluid supplied to the drive unit 16 expands in the drive unit 16. In addition, the working fluid performs work at the time of expansion to cause a rotary shaft (turbine rotor) of the turbine to rotate. In other words, the pressure energy and the thermal energy applied to the working fluid are converted into mechanical energy.

The turbine is coupled to a rotary shaft of a power generator, and the rotary shaft of the power generator also rotates when the turbine rotates, to generate electric power.

The supercritical CO₂ supplied to the turbine is brought into a high-temperature and high-pressure state. In other words, the working fluid supplied to the drive unit 16 has very high energy including both of pressure energy and thermal energy. As a result, the drive unit 16 can have a higher power generation efficiency.

The pressure of the working fluid discharged from the drive unit 16 drops to, for example, around an atmospheric pressure. This working fluid is not released to the outside of the power plant 100, and is cooled to, for example, about 35°C with cooling water or the like.

### [1-9] Low-pressure Working Fluid Storage Tank

The low-pressure working fluid storage tank 17 at least temporarily stores the working fluid that has been set at a low temperature and a low pressure.

The low-pressure working fluid storage tank 17 is not particularly limited, and includes, for example, a membrane gas holder.

The low-pressure working fluid stored in the low-pressure working fluid storage tank 17 is, as required, pressurized again in the compression unit 10 similarly to the above to become the subcritical state or the supercritical state, and the pressurized working fluid is used for power generation.

### [1-10] Regarding Power Generation Cycle

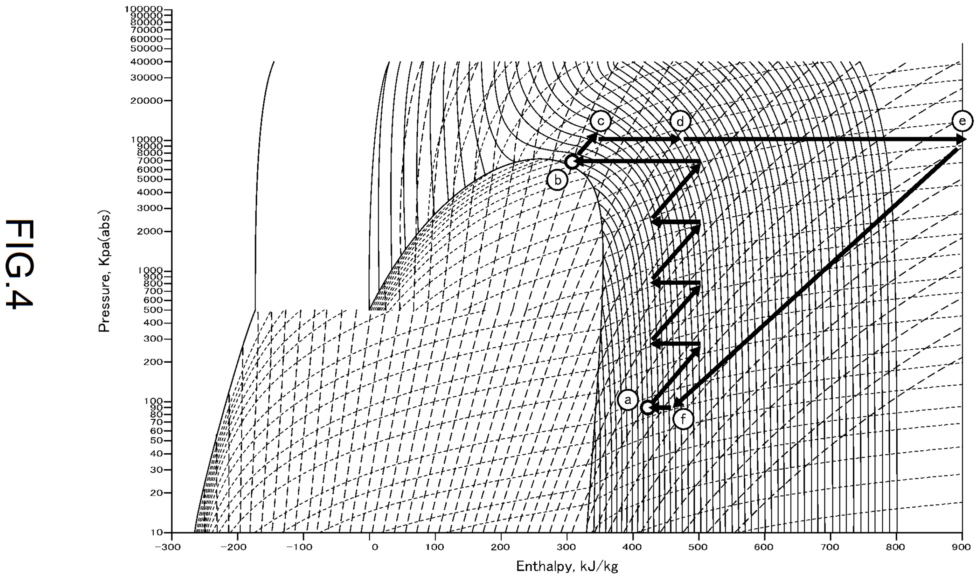

Next, the power generation cycle in the power plant 100 as described above is described with reference to FIG. 4.

FIG. 4 is a pressure-specific enthalpy diagram (p-h diagram) for illustrating a state of carbon dioxide which is the working fluid, in the power generation cycle of the power plant.

First, point "a" represents a state of room-temperature and low-pressure CO₂ stored in the low-pressure working fluid storage tank 17.

Then, as indicated by the arrow from point "a" to point "b", in the compression unit 10, CO₂ is compressed to the subcritical state or the supercritical state, and exhaust heat generated at the time of compression is recovered. The compressed supercritical CO₂ is stored in the storage unit 11. Further, the exhaust heat recovered at the time of compression is stored in the exhaust heat storage unit 12.

FIG. 4 shows a case in which a cycle of compression and exhaust-heat recovery is performed in four stages, but the present invention is not limited thereto.

Next, as indicated by the arrow from point "b" to point "c", the supercritical CO₂ is boosted in pressure by the booster pump 13.

The supercritical CO₂ boosted in pressure by the booster pump 13 is sent to the heat exchanger 14.

Next, as indicated by the arrow from point "c" to point "d", the supercritical CO₂ is heated by the heat exchanger 14 through use of the thermal energy stored in the exhaust heat storage unit 12.

The supercritical CO₂ heated by the heat exchanger 14 is sent to the heating unit 15.

Next, as indicated by the arrow from point "d" to point "e", the supercritical CO₂ is heated by the heating unit 15 through use of the energy stored in the energy storage unit.

The supercritical CO₂ heated by the heating unit 15 is supplied to the drive unit 16.

Then, as indicated by the arrow from point "e" to point "f", when the pressurized and heated supercritical CO₂ expands, the turbine is rotated in the drive unit 16 to generate electric power.

The CO₂ discharged from the drive unit 16 is brought into a room-temperature and low-pressure state, and is stored again in the low-pressure working fluid storage tank 17 (the arrow from point "f" to point "a").

Regarding the above-mentioned processes of the arrow from "d" to "e" and the arrow from "e" to "f", in the illustrated example, the case in which the processes are performed in one stage has been given as an example, but the present invention is not limited thereto. For example, supercritical CO₂ heated to a certain degree in the heating unit 15 may be used to generate electric power in the drive unit 16, and then heating may be performed again in the heating unit 15. Thus, processes of heating and power generation may be performed in two or more stages.

### [1-11] Adjustment Unit

As described above, in the power plant 100, a part of the variable renewable energy is consumed as energy to be used in the compression unit 10, and another part of the variable renewable energy is consumed as energy to be stored in the energy storage unit.

In addition, in the power plant 100, the adjustment unit adjusts the ratio between the energy amount Ec of the variable renewable energy to be supplied toward the compression unit 10 and the energy amount Eh of the variable renewable energy to be supplied toward the energy storage unit.

The adjustment unit is not particularly limited, and includes, for example, a central processing unit (CPU).

In power generation using variable renewable energy, when there is a demand for electric power, supply is performed, in other words, electric power is supplied, and when the demand for electric power is low, the electric power is stored as surplus electric power. It is demanded to effectively use this surplus electric power.

In view of the above, the adjustment unit forming the power plant 100 adjusts a ratio between an energy amount of the variable renewable energy to be used for charging and an energy amount of the variable renewable energy to be used for subsequent power generation, in other words, a ratio between an amount of energy to be consumed to compress the working fluid in the compression unit 10 and an amount of energy to be used for subsequent power generation and stored in the energy storage unit in order to heat the working fluid in the heating unit 15.

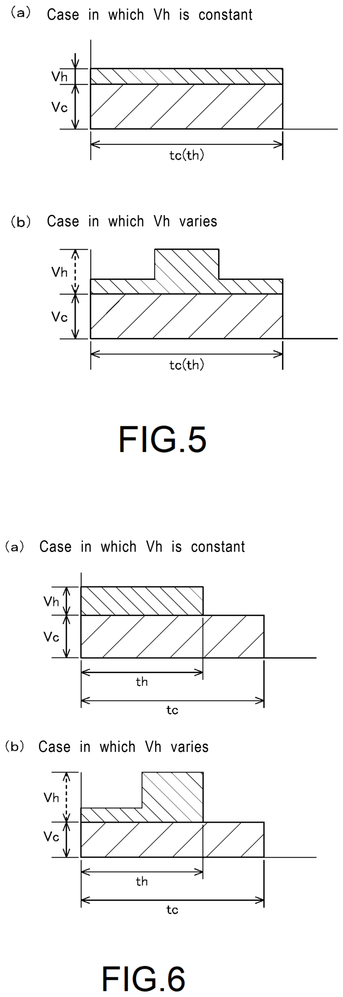

As a method of adjusting the ratio between the amount of energy to be consumed to compress the working fluid in the compression unit 10 and the amount of energy to be consumed to heat the working fluid in the heating unit 15, in the power plant 100, there are given a case in which the compression unit 10 and the energy storage unit are simultaneously activated (see FIG. 5(b)) and a case in which, by switching between activation and stop of at least one of the compression unit 10 or the energy storage unit, a timing to activate only one of the compression unit 10 or the energy storage unit is provided (see FIG. 6(a)), and those cases may be performed in combination (see FIG. 6(b)). Specifically, the state in which the compression unit 10 and the energy storage unit are simultaneously activated or the state in which only the compression unit 10 is activated (see FIGS. 6) can be obtained by, for example, always activating the compression unit 10 and turning on and off only the energy storage unit.

As used herein, the phrase "the energy storage unit is activated" refers to producing energy to be stored in the energy storage unit.

When the compression unit 10 and the energy storage unit are simultaneously activated, the adjustment unit adjusts the ratio between the amount of the variable renewable energy to be used in the compression unit 10 and the amount of the variable renewable energy to be stored in the energy storage unit.

In this manner, electricity can be flexibly stored in accordance with the change in amount of surplus electric power derived from the variable renewable energy.

The adjustment unit adjusts, for example, a ratio between electric power to be used in the compression unit 10 and electric power to be used in the energy storage unit, to thereby adjust the ratio between the energy amount of the variable renewable energy to be used in the compression unit 10 and the energy amount of the variable renewable energy to be stored in the energy storage unit.

FIGS. 5 are diagrams for schematically illustrating the ratio between the electric power to be used in the compression unit and the electric power to be used in the energy storage unit, in the power plant.

In this case, "tc" represents a charging time period, in other words, a time period in which supply of electric power required to operate the compression unit 10 is received. Further, "th" represents a time period in which supply of electric power required to store, in the energy storage unit, energy required to heat the working fluid at the time of power generation is received.

Further, Vc represents charging electric power, in other words, electric power required to operate the compression unit 10. Further, Vh represents electric power required to store, in the energy storage unit, energy required to heat the working fluid at the time of power generation.

FIGS. 5 show a case in which "tc" and "th" are substantially the same, in other words, a case in which the compression unit 10 and the energy storage unit are simultaneously activated.

FIG. 5(a) shows a case in which Vh is constant, and FIG. 5(b) shows a case in which Vh varies.

It is not easy to change the electric power Vc to be consumed by the compression unit 10, but it is relatively easy to change the electric power Vh to be used in the energy storage unit.

Accordingly, the adjustment unit can adjust the ratio between Vc and Vh by, for example, changing Vh.

When the amount of surplus electric power derived from the variable renewable energy is large, the adjustment unit increases the electric power Vh to be used to store energy in the energy storage unit in addition to supplying electric power to the compression unit 10, to thereby enhance the energy amount Eh of energy to be supplied toward the energy storage unit. In this manner, electricity can be flexibly and efficiently stored in accordance with the change in variable renewable energy.

As used herein, the terms "decreasing" and "increasing" the ratio of electric power or amount of energy are relative terms and include a concept of "decreasing" or "increasing" the ratio to that in normal cases.

Further, the "normal cases" refer to a state in which a balance is kept between the supply amount of the variable renewable energy and the demand for electric power, or initial setting values in a power plant operation.

When the amount of surplus electric power derived from the variable renewable energy is small, the adjustment unit decreases the electric power Vh to be used to store energy in the energy storage unit in addition to supplying electric power to the compression unit 10, to thereby perform charging while reducing the energy amount Eh of energy to be supplied toward the energy storage unit.

The electric power Vc to be consumed by the compression unit 10 cannot be changed, but the electric power Vh of the energy storage unit can be increased to increase the energy amount Eh of energy to be stored in the energy storage unit for usage in the heating unit 15 in the subsequent power generation. In this manner, electricity can be flexibly and efficiently stored in accordance with the amount of surplus electric power generated from renewable energy having large variations.

In this manner, the ratio of power generation using the supercritical CO₂ stored in the storage unit 11 is increased. As a result, it is possible to ensure energy required to achieve supply of electric power from CO₂ in an energy storage state.

As described above, in the power plant 100, when the amount of surplus electric power derived from the variable renewable energy is small, the adjustment unit can be configured to perform charging and energy storage while decreasing the electric power Vh to be used to store energy in the energy storage unit.

In the description above, the case in which the adjustment unit adjusts the ratio between Vc and Vh by changing Vh has been described as an example, but the present invention is not limited thereto, and the adjustment unit may adjust the ratio between Vc and Vh by changing Vc or by changing both Vc and Vh.

Vc is electric power to be supplied for operation of the compression unit 10 by the working fluid. However, from the viewpoint of reducing capital expenditure (CAPEX) in the power plant 100, the number of gas compressors in the compression unit 10 is minimized. Vc at the time of compression of the working fluid is almost constant, and hence it is not easy to adapt to power variations.

Meanwhile, Vh is electric power to be supplied for operation of the energy storage unit, in other words, electric power to be consumed by commoditized equipment such as a heat pump, a water electrolysis device, and an electric heater, and it is easy to adapt to power variations by using a plurality of small devices in combination.

In view of the above, it is preferred that the adjustment unit adjust the ratio between Vc and Vh by keeping Vc almost constant and changing the value of Vh.

In this manner, the adjustment unit can easily adjust the ratio between the energy amount Ec of the variable renewable energy to be supplied toward the compression unit 10 and the energy amount Eh of the variable renewable energy to be supplied toward the energy storage unit.

Further, in FIG. 5(b), the change in value of Vh forms a rectangle, in other words, the value of Vh is abruptly changed, but the value of Vh may be gradually changed. In this case, the change in value of Vh may be a constant change having a slope form, or may be a change having a gentle curve form.

Further, when activation and stop are switched for at least one of the compression unit 10 or the energy storage unit to provide a timing to activate only one of the compression unit 10 or the energy storage unit, the adjustment unit can adjust the ratio between the time period "tc" in which the variable renewable energy is used in the compression unit 10 and the time period "th" in which the variable renewable energy is stored in the energy storage unit.

In this manner, electricity can be flexibly and efficiently stored in accordance with the change in amount of surplus electric power caused by the variable renewable energy.

FIGS. 6 are diagrams for illustrating a ratio between a time period in which the variable renewable energy is used in the compression unit and a time period in which the variable renewable energy is stored in the energy storage unit in the power plant.

The adjustment unit adjusts the ratio between "tc" and "th" by, for example, setting "th" to a value different from "tc," in particular, to a value smaller than "tc."

When the surplus electric value derived from the variable renewable energy becomes smaller, the adjustment unit turns off the energy storage unit to supply energy only toward the compression unit 10.

FIG. 6(a) shows a case in which the electric power Vh supplied toward the energy storage unit is constant in a time slot in which the energy storage unit is operated, but as illustrated in FIG. 6(b), this case may be combined with a case in which Vh is varied in the time slot in which the energy storage unit is operated.

Further, in the description above, the case in which the adjustment unit turns off the energy storage unit to activate only the compression unit 10 to adjust the ratio between the time period "tc" in which the variable renewable energy is used by the compression unit 10 and the time period "th" in which the variable renewable energy is stored in the energy storage unit has been given as an example, but the present invention is not limited thereto. The compression unit 10 may be turned off and only the energy storage unit may be activated, but from the viewpoint of easily adapting to power variations, it is preferred that on and off of the energy storage unit be switched.

In this manner, the adjustment unit can easily adjust the ratio between the time period "tc" in which the variable renewable energy is used in the compression unit 10 and the time period "th" in which the variable renewable energy is stored in the energy storage unit.

Next, an example of a procedure for the adjustment unit to adjust the ratio between the energy amount Ec of the variable renewable energy to be supplied toward the compression unit 10 and the energy amount Eh of the variable renewable energy to be supplied toward the energy storage unit is described.
(1) First, a future forecast of the variable renewable energy is made.

Specifically, for example, predictions regarding surplus electric power of variable renewable energy, time slots, charging electric power amounts, and the like are made.

(2) Next, an optimal charging process is set.

Specifically, for example, first, the charging electric power amount, the charging electric power (power consumption of the compression unit 10), the charging time period (operation time period of the compression unit 10), and the exhaust-heat recovery amount from the compression unit 10 are estimated.

Next, the heat amount required to achieve a high-energy working fluid, which is required at the time of power generation, is estimated.

Then, a heat amount required to compensate for the shortage of the exhaust-heat recovery amount with the heat amount from the energy storage unit relative to the heat amount required to achieve a high-energy working fluid is set.

Next, in order to achieve a high-energy working fluid, operation conditions of the energy storage unit are set so as to generate the required heat amount in the energy storage unit as set above.

Then, an operation pattern of the energy storage unit, in other words, the time period "th" and the electric power Vh to be supplied to the energy storage unit are set.

(3) Then, the operation of the charging and energy-storing process is performed based on the settings in the section (2) above. In other words, a part of the variable renewable energy is used to compress the working fluid to the subcritical state or the supercritical state in the compression unit 10. In addition, the compressed working fluid is stored in the storage unit 11.

(4) Next, the operation of the power generation process is performed. In other words, energy derived from another part of the variable renewable energy stored in the energy storage unit is used to heat, in the heating unit 15, the working fluid in the supercritical state stored in the storage unit 11, and electric power is generated in the drive unit 16.

In this manner, the output can be changed in accordance with the supply amount of the variable renewable energy and the demand for electric power, and hence the variable renewable energy can be effectively used.

### <Second Embodiment>

Next, a second embodiment of the present invention is described.

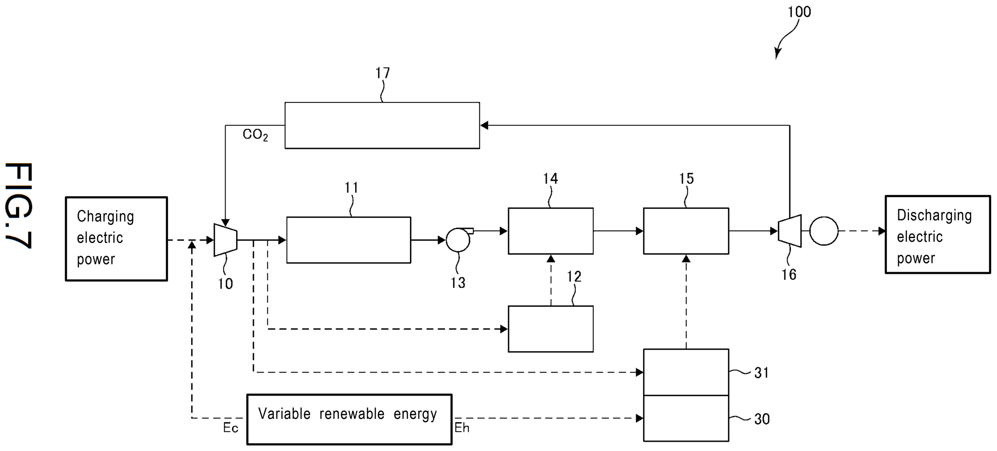

FIG. 7 is a block diagram for schematically illustrating a power plant according to the second embodiment of the present invention.

The power plant of this embodiment is substantially the same as that of the above-mentioned embodiment except that the energy stored in the energy storage unit is different, and hence the same components are denoted by the same reference symbols as those used above, and detailed description thereof is omitted.

The power plant 100 illustrated in FIG. 7 includes an electric heater 30 and a heating medium oil 31 serving as an energy storage unit.

In the power plant of this embodiment, the energy stored in the energy storage unit is thermal energy stored in the heating medium oil 31 by activating the electric heater 30 through use of the variable renewable energy to heat the heating medium oil 31 with the electric heater 30.

The heating medium oil 31 is accommodated in, for example, a heat storage tank (not shown). The heat storage tank has, for example, a heat insulating structure in which, for example, its surrounding is covered with a heat insulating material, and the release of heat from the inside of the tank is suppressed.

As the heating medium oil 31, for example, a mineral oilbased heating medium oil that is excellent in stability against high-temperature oxidation is used.

In addition, the electric heater 30 is activated with the electric power generated through use of the variable renewable energy, and the heating medium oil 31 in the heat storage tank is heated with the heat of the electric heater 30 so that thermal energy is stored in the heating medium oil 31.

With the thermal energy being stored in the heating medium oil 31 through use of the variable renewable energy, heat can be stored at a high temperature and a high capacity, in other words, high thermal energy can be stored.

### <Third Embodiment>

Next, a third embodiment of the present invention is described.

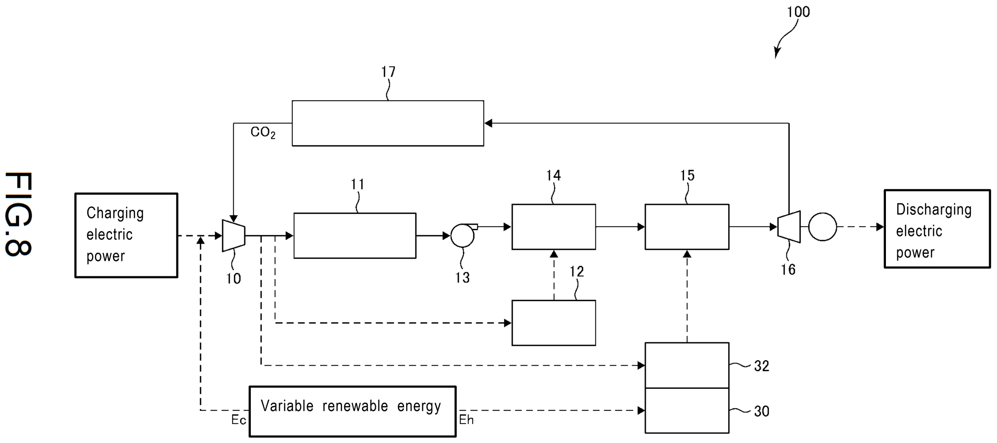

FIG. 8 is a block diagram for schematically illustrating a power plant according to the third embodiment of the present invention.

The power plant of this embodiment is substantially the same as that of the above-mentioned embodiments except that the energy stored in the energy storage unit is different, and hence the same components are denoted by the same reference symbols as above, and detailed description thereof is omitted.

The power plant 100 illustrated in FIG. 8 includes an electric heater 30 and a rock 32 serving as an energy storage unit.

In the power plant of this embodiment, the energy stored in the energy storage unit is thermal energy stored in the rock 32 by activating the electric heater 30 through use of the variable renewable energy to heat the rock 32 with the electric heater 30.

The rock 32 is packed in, for example, a heat storage container (not shown). The heat storage container has, for example, a heat insulating structure in which, for example, its surrounding is covered with a heat insulating material, and the release of heat from the inside of the container is suppressed.

As the rock 32, for example, a volcanic rock is used.

In addition, the electric heater 30 is activated with the electric power generated through use of the variable renewable energy, and the rock 32 in the heat storage container is heated with the heat of the electric heater 30 so that thermal energy is stored in the rock 32.

The rock 32 is heated to, for example, a high temperature of 600°C or more.

In addition to directly heating the rock 32 with the electric heater 30, a fan may be used in combination in addition to the electric heater 30. Hot air may be generated by operating the electric heater 30 and the fan, and the hot air may be sent into the heat storage container to heat the rock 32 to thereby store thermal energy.

With the thermal energy being stored in the rock 32 through use of the variable renewable energy, heat can be stored at a high temperature and a high capacity, in other words, high thermal energy can be stored.

### <Fourth Embodiment>

Next, a fourth embodiment of the present invention is described.

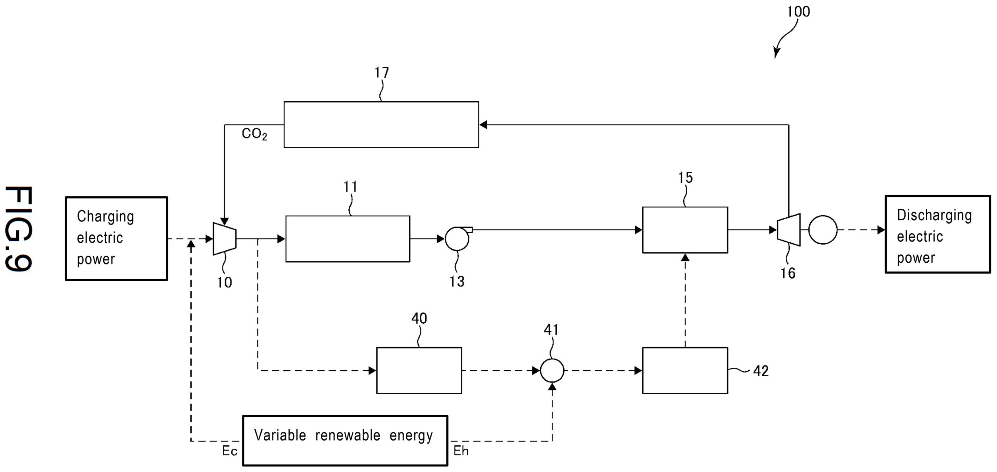

FIG. 9 is a block diagram for schematically illustrating a power plant according to the fourth embodiment of the present invention.

The power plant 100 of this embodiment is substantially the same as that of the above-mentioned embodiments except that the energy stored in the energy storage unit is different, and hence the same components are denoted by the same reference symbols as those used above, and detailed description thereof is omitted.

The power plant 100 illustrated in FIG. 9 includes a low-temperature heat storage unit 40, a heat pump 41, and a high-temperature heat storage unit 42 serving as an energy storage unit.

In the power plant of this embodiment, the energy to be stored in the energy storage unit is thermal energy obtained by activating a heat pump through use of the variable renewable energy to increase a temperature of exhaust heat from the compression unit 10 with the heat pump.

The low-temperature heat storage unit 40 recovers the exhaust heat generated when the working fluid is compressed in the compression unit 10, and at least temporarily stores the thermal energy, in other words, stores heat.

In the low-temperature heat storage unit 40, the exhaust heat from the compression unit 10 is stored at a low temperature of, for example, 200°C or less.

The heat pump 41 increases the temperature of the thermal energy stored in the low-temperature heat storage unit 40, in other words, the exhaust heat generated from the compression unit 10, and applies higher thermal energy.

The exhaust heat that has been increased in temperature by the heat pump 41 is at least temporarily stored in the high-temperature heat storage unit 42 serving as the energy storage unit.

With the exhaust heat from the compression unit 10 being increased in temperature by the heat pump 41 through use of the variable renewable energy, it becomes possible to store the exhaust heat at a high temperature, in other words, store high thermal energy.

The preferred embodiments of the present invention have been described above, but the present invention is not limited to those embodiments.

For example, the power plant of the present invention may include components other than the above-mentioned components (compression unit, storage unit, exhaust heat storage unit, booster pump, heat exchanger, energy storage unit, heating unit, drive unit, low-pressure working fluid storage tank, and adjustment unit).

Further, in the description above, the case in which, in the hydrogen combustion unit, electric power is generated by combusting hydrogen stored in the hydrogen storage tank, and the exhaust heat at the time of power generation is stored as thermal energy in the hydrogen heat storage unit, has been given as an example. However, for example, electric power may be generated through use of a fuel cell, and the exhaust heat generated at the time of power generation may be stored as thermal energy in the hydrogen heat storage unit. With such a configuration, similarly to the case in which the hydrogen gas turbine or the hydrogen gas engine as described above is used, exhaust heat at the time of power generation using hydrogen is used for power generation, and the total power generation efficiency can be further improved.

Further, for example, the energy derived from the variable renewable energy and stored in the energy storage unit may be a combination of a plurality of types of energy produced by different methods.

### Reference Signs List

10: compression unit
11: storage unit
12: exhaust heat storage unit
13: booster pump
14: heat exchanger
15: heating unit
16: drive unit
17: low-pressure working fluid storage tank
21: water electrolysis device
22: hydrogen storage tank
23: hydrogen combustion unit
24: hydrogen heat storage unit
30: electric heater
31: heating medium oil
32: rock
40: low-temperature heat storage unit
41: heat pump
42: high-temperature heat storage unit
100: power plant
a: point
b: point
c: point
d: point
e: point
f: point
A: region
B: region
C: region
D: region
E: critical point
Ec: energy amount
Eh: energy amount
Vc: electric power
Vh: electric power
tc: time period
th: time period

## Claims

1. A power plant for generating electric power through use of a working fluid, the power plant comprising:
a compression unit configured to compress the working fluid to a subcritical state or a supercritical state through use of a part of variable renewable energy to apply pressure energy to the working fluid;
a storage unit configured to store the compressed working fluid;
an energy storage unit configured to store energy derived from another part of the variable renewable energy;
a heating unit configured to heat the working fluid through use of the energy stored in the energy storage unit to apply thermal energy to the compressed working fluid;
a drive unit configured to convert the pressure energy and the thermal energy applied to the working fluid into mechanical energy and perform drive through use of the mechanical energy; and
an adjustment unit configured to adjust a ratio between an energy amount of the variable renewable energy to be supplied toward the compression unit and an energy amount of the variable renewable energy to be supplied toward the energy storage unit.

2. The power plant according to claim 1, wherein the working fluid is at least one type selected from the group consisting of air, nitrogen, and carbon dioxide.

3. The power plant according to claim 1 or 2, wherein, when the compression unit and the energy storage unit are simultaneously activated, the adjustment unit is configured to adjust a ratio between an energy amount of the variable renewable energy to be used in the compression unit and an energy amount of the variable renewable energy to be stored in the energy storage unit.

4. The power plant according to any one of claims 1 to 3, wherein, when activation and stop are switched for at least one of the compression unit or the energy storage unit to provide a timing to activate only one of the compression unit or the energy storage unit, the adjustment unit is configured to adjust a ratio between a time period in which the variable renewable energy is used in the compression unit and a time period in which the variable renewable energy is stored in the energy storage unit.

5. The power plant according to any one of claims 1 to 4, wherein the energy to be stored in the energy storage unit is potential energy of hydrogen obtained by electrolyzing water through use of the variable renewable energy or thermal energy obtained by combusting the hydrogen.

6. The power plant according to any one of claims 1 to 5, wherein the energy to be stored in the energy storage unit is thermal energy stored in heating medium oil by activating an electric heater through use of the variable renewable energy to heat the heating medium oil with the electric heater.

7. The power plant according to any one of claims 1 to 6, wherein the energy to be stored in the energy storage unit is thermal energy stored in a rock by activating an electric heater through use of the variable renewable energy to heat the rock with the electric heater.

8. The power plant according to any one of claims 1 to 7, wherein the energy to be stored in the energy storage unit is thermal energy obtained by activating a heat pump through use of the variable renewable energy to increase a temperature of exhaust heat from the compression unit with the heat pump.
